# EUROPÄISCHE PATENTSCHRIFT

(11) **EP 3 353 029 B1**
(45) Veröffentlichungstag und Bekanntmachung des Hinweises auf die Patenterteilung: **12.01.2022**
(21) Anmeldenummer: 16756956.5
(22) Anmeldetag: 05.08.2016
(51) Int. Cl.: B60K 35/00, B60K 37/06, B60W 30/06, B60W 50/08, B60W 30/12, B60W 30/14, B60W 50/14

(54) **BENUTZERSCHNITTSTELLENVORRICHTUNG ZUR AUSWAHL EINES BETRIEBSMODUS FÜR AUTOMATISIERTES FAHREN**
USER INTERFACE DEVICE FOR SELECTING AN OPERATING MODE FOR AN AUTOMATED DRIVE
DISPOSITIF D'INTERFACE UTILISATEUR DESTINÉ À SÉLECTIONNER UN MODE DE FONCTIONNEMENT POUR UNE CONDUITE AUTOMATISÉE

(30) Priorität: 25.09.2015 DE 102015218444
(43) Veröffentlichungstag der Anmeldung: 01.08.2018
(73) Patentinhaber: Bayerische Motoren Werke Aktiengesellschaft, 80809 München (DE)
(72) Erfinder: EICHHORN, Julian, 80639 München (DE); LORENZ, Lutz, 81539 München (DE); NIEMANN, Julia, 80634 München (DE); BREISINGER, Marc, San Francisco, California 94110 (US); SÜSSENGUTH, Philipp, Sunnyvale, California 94086 (US)
(86) Internationale Anmeldenummer: PCT/EP2016/068750
(87) Internationale Veröffentlichungsnummer: WO 2017/050477

(56) Entgegenhaltungen:
- WO-A1-2013/117309
- DE-A1-102012 002 303
- DE-A1-102013 015 227
- GB-A- 2 492 896
- US-A1- 2014 244 096

## Beschreibung

Die vorliegende Erfindung betrifft eine Benutzerschnittstellenvorrichtung zur Auswahl eines Betriebsmodus für automatisiertes Fahren bei einem Kraftfahrzeug sowie eine Lenkvorrichtung für ein Kraftfahrzeug, insbesondere ein Lenkrad, mit einer solchen Benutzerschnittstellenvorrichtung.

Moderne Kraftfahrzeuge, insbesondere Personenkraftfahrzeuge (PKW), Lastkraftfahrzeuge (LKW) und Busse, weisen eine Reihe von Systemen zur Unterstützung des Fahrers beim Fahren des Kraftfahrzeugs auf. Zu diesen Systemen gehören zum einen verschiedene Informationssysteme, die den Fahrer mit für das Steuern des Fahrzeugs relevanten Informationen versorgen (Geschwindigkeitsanzeigen, Navigationssystem usw.), sowie darüber hinausgehende Fahrerassistenzsysteme, welche den Fahrer bei normalen oder gefährlichen Situationen unterstützen. Insbesondere können viele Fahrassistenzsysteme vor erkannten Abweichungen von einem Sollverhalten, etwa einem der aktuellen Geschwindigkeit angemessen Abstand zum vorausfahrenden Fahrzeug, warnen oder im Sinne eines teilautomatisierten Fahrens gar selbstständig eingreifen, um die Abweichung zu beheben. Auch Systeme für ein teilautomatisiertes Fahren des Fahrzeugs sind bereits seit längerem in Einsatz, man denke nur an die automatische Geschwindigkeitsregelung (meist als "Tempomat" bzw. "Automatic Cruise Control, ACC" bezeichnet), bei der man eine Zielgeschwindigkeit einstellen kann, und das Fahrzeug selbstständig - soweit möglich - diese Zielgeschwindigkeit beibehält, ohne dass dafür das Gaspedal entsprechend betätigt werden müsste. Auch automatische Einparkhilfen sind bekannt. Gegenstand der aktuellen Forschung und Entwicklung sind zudem Konzepte und Prototypen für hochautomatisiertes und sogar autonomes Fahren. Beim hochautomatisierten Fahren erfolgt die Steuerung des Fahrzeugs überwiegend vollständig automatisiert, und der Fahrer muss nur in wenigen bestimmten Fahrsituationen selbst eingreifen. Beim autonomen Fahren erfolgt die Steuerung des Fahrzeugs grundsätzlich vollständig automatisiert und der Fahrer muss weder selbst eingreifen noch das automatisierte Fahren überwachen.

Selbst wenn ein Kraftfahrzeug für ein teilautomatisiertes, hochautomatisiertes oder gar autonomes Fahren ausgerüstet ist, kann es wünschenswert sein, dem Fahrer die Möglichkeit zu geben, zwischen den im Fahrzeug vorhandenen verschiedenen Fahrautomatisierungsstufen, insbesondere zwischen einer manuellen Bedienung und einer oder mehreren automatisierten Fahrautomatisierungsstufen des Fahrzeugs situationsbedingt auszuwählen. So könnte es etwa im täglichen Berufsverkehr, insbesondere bei Verkehrsstaus, wünschenswert sein, hoch automatisiert oder autonom zu fahren, während bei Fahrten auf einer freien Landstraße oder in besonders anspruchsvollen Umgebungen, wie etwa im Gebirge, manuelles Fahren bevorzugt werden könnte.

Ein dazu vom Automobilzulieferer TRW entwickeltes Lenkradkonzept wurde auf dem Autosalon 2014 in Genf im Rahmen eines Studienfahrzeugs vorgestellt (vgl. http://www.autobild.de/artikel/trw-neues-lenkrad-konzept-5035989.html). Das Lenkrad kann bei diesem Konzept seitlich verschoben werden. Dies erlaubt es dem Fahrer, das Fahrzeug entweder selbst zu lenken, dem Beifahrer die Steuerung zu übergeben oder das Lenkrad im automatisierten Fahrmodus in der Fahrzeugmitte zu parken, um beispielsweise Lesen zu können. Ein Display im Lenkrad zeigt an, ob das Fahrzeug manuell oder automatisiert gelenkt wird, und wann die Übergabe zwischen den beiden Fahrmodi abgeschlossen ist. Einige Bedienfunktionen sind im Lenkrad integriert, andere werden über eine Sprachsteuerung realisiert. Das Lenkrad des Konzepts von TRW hat verschiedene Modi: Der sogenannte "Driver Mode Manager" zeigt in einem Display ein "A", wenn sich das Fahrzeug im automatisierten Modus befindet. Ergreift der Fahrer das Lenkrad, signalisiert ein "M" die Übergabebereitschaft. Mit Betätigung des transparenten "Push-to-Drive"-Schalters kann der Fahrer die Kontrolle über das Fahrzeug wieder übernehmen. Lässt der Fahrer das Lenkrad hingegen im manuellen Modus los, wechselt die Anzeige von "M" zu "A" und das Fahrzeug fährt wieder automatisiert. Mit einem "Push-to-Talk"(PTT)-Schalter aktiviert der Fahrer die Spracheingabe des Fahrzeugs, über die sich verschiedene Funktionen bedienen lassen.

Bei noch weiteren bekannten Lösungen wird eine Vielzahl von jeweils zugeordneten Eingabeelementen vorgesehen, um die verschiedenen im Fahrzeug vorhandenen Fahrautomatisierungsstufen und deren Einstellungen für den Fahrer auswählbar zu machen.

Beispielsweise offenbart die WO 2013/117309 A1 eine Bedieneinrichtung für eine Fahrassistenzeinrichtung, die mehrere Bedienelemente aufweist, über die in Abhängigkeit von dem momentanen aktiven Assistenzmodus Fahrparameter der Fahrassistenzeinrichtung eingestellt werden. Dabei ist die Bedieneinrichtung als Handballenablage ausgestaltet und die Bedienelemente sind an einem in einem für einen Fahrer primären Greifraum angeordneten Auflagekörper für eine Handfläche eines Benutzers der Bedieneinrichtung angeordnet.

Der Erfindung liegt die Aufgabe zugrunde, die Bedienung zur Auswahl und Einstellung von im Kraftfahrzeug vorhandenen Fahrautomatisierungsstufen weiter zu verbessern.

Eine Lösung dieser Aufgabe wird gemäß der Lehre der unabhängigen Ansprüche erreicht durch eine Benutzerschnittstellenvorrichtung gemäß Anspruch 1 zur Auswahl eines Betriebsmodus für automatisiertes Fahren bei einem Kraftfahrzeug, sowie eine Lenkvorrichtung gemäß Anspruch 15 mit einer solchen Benutzerschnittstellenvorrichtung.

Verschiedene Ausführungsformen und Weiterbildungen der Erfindung sind Gegenstand der Unteransprüche.

Ein erster Aspekt der Erfindung betrifft eine Benutzerschnittstellenvorrichtung zur Auswahl eines Betriebsmodus für automatisiertes Fahren bei einem Kraftfahrzeug. Die Benutzerschnittstellenvorrichtung weist eine Schaltvorrichtung zum Umschalten zwischen verschiedenen Fahrautomatisierungsstufen eines Kraftfahrzeugs, eine Auswahlvorrichtung zur Festlegung wenigstens eines Fahrparameters zur Konfiguration der mittels der Schaltvorrichtung ausgewählten Fahrautomatisierungsstufe und eine mit der Auswahlvorrichtung zusammenwirkende Anzeigevorrichtung zur Anzeige von verfügbaren Auswahlmöglichkeiten für den wenigstens einen Fahrparameter bei der Konfiguration der ausgewählten Fahrautomatisierungsstufe auf.

Unter einem "Kraftfahrzeug" im Sinne der Erfindung ist jede Art von Landfahrzeug zu verstehen, das durch Maschinenkraft bewegt wird, ohne an Schienen gebunden zu sein. Insbesondere sind Personenkraftwagen (PKW), Lastkraftwagen (LKW), Motorräder und Busse jeweils Kraftfahrzeuge im Sinne der Erfindung.

Unter einer "Benutzerschnittstellenvorrichtung zur Auswahl eines Betriebsmodus für automatisiertes Fahren bei einem Kraftfahrzeug" ist im Sinne der Erfindung eine Vorrichtung zu verstehen, mittels derer ein Fahrer des Kraftfahrzeugs einen Betriebsmodus für automatisiertes Fahren, insbesondere eine Fahrautomatisierungsstufe sowie gegebenenfalls ein oder mehrere zugehörige Fahrparameter, einstellen bzw. aktivieren oder deaktivieren kann.

Unter einer "Fahrautomatisierungsstufe" im Sinne der Erfindung ist ein Automatisierungsgrad für das Fahren bzw. Steuern des Fahrzeugs zu verstehen. Insbesondere sind manuelles Fahren (auch unter zusätzlicher Nutzung von Fahrassistenzsystemen), teilautomatisiertes Fahren, hochautomatisiertes Fahren sowie autonomes Fahren Fahrautomatisierungsstufen im Sinne der Erfindung.

Unter einem "Fahrparameter" im Sinne der Erfindung ist ein Parameter zur Konfiguration einer zugehörigen Fahrautomatisierungsstufe zu verstehen, soweit diese über wenigstens eine Einstellmöglichkeit, wie etwa eine Ziel- oder Maximalgeschwindigkeit, verfügt. Die Einstellmöglichkeit kann insbesondere einen numerischen Wert oder einen Betriebsmodus betreffen.

Unter einer "Schaltvorrichtung zum Umschalten zwischen verschiedenen Fahrautomatisierungsstufen" im Sinne der Erfindung ist eine Vorrichtung zur Auswahl und Aktivierung einer aus mehreren auswählbaren Fahrautomatisierungsstufen eines Kraftfahrzeugs unter gleichzeitiger Deaktivierung der anderen Fahrautomatisierungsstufen zu verstehen. Dabei kann eine höher automatisierte Fahrautomatisierungsstufe jedoch eine oder mehrere, insbesondere auch sämtliche automatisierten Funktionen einer oder mehrerer der weniger automatisierten Fahrautomatisierungsstufen enthalten.

So wird die Auswahl und Konfiguration einer von mehreren Fahrautomatisierungsstufen des Kraftfahrzeugs auch beim Vorhandensein einer Vielzahl solcher Stufen und Konfigurationsmöglichkeiten dafür mit Hilfe eines einfachen und platzsparenden Bedienkonzepts mit nur zwei verschiedenen Eingabearten, nämlich dem Umschalten zwischen den Fahrautomatisierungsstufen und der Konfiguration mittels der Auswahlvorrichtung ermöglicht. Dies ist insbesondere bei einer Anordnung der Benutzerschnittstellenvorrichtung an einer Steuervorrichtung mit funktions- oder designbedingt bedingt stark begrenztem Platzangebot, etwa an einer Lenkradspeiche, von Vorteil. Über die Anzeigevorrichtung erfolgt zudem eine Benutzerführung mit Auswahlanzeige und bevorzugt auch Rückmeldung zur aktuellen Auswahl, so dass die Bedienung der Benutzerschnittstellenvorrichtung auch "blind", d.h. ohne dass der Blick des Fahrers auf sie gerichtet sein muss, erfolgen kann. So wird die zugrunde liegende Aufgabe gelöst.

Nachfolgend werden bevorzugte Ausführungsformen der Benutzerschnittstellenvorrichtung und deren Weiterbildungen beschrieben, die jeweils, soweit dies nicht ausdrücklich ausgeschlossen wird, beliebig miteinander sowie mit dem im Weiteren beschriebenen zweiten Aspekt der Erfindung kombiniert werden können.

Gemäß einer ersten bevorzugten Ausführungsform weist die Schaltvorrichtung wenigstens drei zu verschiedenen Fahrautomatisierungsstufen des Kraftfahrzeugs korrespondierende Schaltpositionen auf. Diese wenigstens drei Fahrautomatisierungsstufen können insbesondere aus den folgenden Stufen ausgewählt sein: manuelles Fahren, teilautomatisiertes Fahren, hochautomatisiertes Fahren, autonomes Fahren. Insbesondere für teilautomatisiertes Fahren können auch mehrere sich in ihrem Automatisierungsgrad unterscheidende Teilautomatisierungsstufen sowie eine entsprechende Anzahl von dazu korrespondierenden Schaltpositionen vorgesehen sein. Bevorzugt weist die Schaltvorrichtung genau drei Schaltpositionen auf, insbesondere für manuelles Fahren, teilautomatisiertes Fahren und autonomes Fahren. Auf diese Weise lässt sich einerseits der gesamte Bereich der Automatisierung, vom manuellen Fahren (keine Automatisierung) bis hin zum autonomen Fahren (vollständige Automatisierung) abdecken, wobei eine Konfiguration der entsprechenden Automatisierungsstufen (insbesondere für teilautomatisiertes Fahren) mittels der Auswahlvorrichtung möglich ist Andererseits weist die Auswahlanforderung an den Fahrer aufgrund der geringen Anzahl von Fahrautomatisierungsstufen nur eine geringe Komplexität auf.

Gemäß einer weiteren bevorzugten Ausführungsform weist die Schaltvorrichtung zu jeder Fahrautomatisierungsstufe einen entsprechenden Schalter zum Umschalten auf diese Fahrautomatisierungsstufe auf. Die entsprechenden Schalter, d.h. wenigstens einer davon, können insbesondere als Tastschalter ausgeführt sein, bevorzugt so, dass die Anzahl der zur Schaltvorrichtung gehörenden Tasten der Anzahl der vorhandenen Fahrautomatisierungsstufen bzw. Schaltpositionen entspricht. Auf diese Weise kann ein schnelles und sicheres Umschalten auf die jeweils gewünschte Fahrautomatisierungsstufe unterstützt werden, da die Bedienung von Tasten sehr einfach und auch "blind" möglich ist. Insbesondere kann die Position der Tasten besonders leicht gemerkt werden. Die Tasten können bevorzugt geordnet, d.h. in einer sortierten Reihenfolge gemäß dem Automatisierungsgrad der korrespondierenden Automatisierungsstufen angeordnet sein. So wird auch ein "blindes" Auswählen der gewünschten Fahrautomatisierungsstufe mittels haptischen Erkennens der entsprechenden Taste bzw. von deren Position relativ zu den anderen Tasten der Schaltvorrichtung gefördert.

Die Auswahlvorrichtung ist mehrdimensional betätigbar und zumindest dann, wenn mittels der Schaltvorrichtung eine Fahrautomatisierungsstufe für teilautomatisiertes Fahren ausgewählt ist, dient die Betätigung der Auswahlvorrichtung entlang einer ersten Auswahldimension zur Auswahl eines von mehreren Fahrparametern für die ausgewählte Fahrautomatisierungsstufe und entlang einer zweiten Auswahldimension zur Auswahl einer Einstellung für den ausgewählten Fahrparameter.

Unter einer "Auswahldimension" im Sinne der Erfindung ist hierbei eine Betätigungsart für die Auswahlvorrichtung zu verstehen, die von jeder anderen verfügbaren Betätigungsart für sie unterscheidbar ist, so dass jeder der verfügbaren Auswahldimensionen eine separate Bedeutung, insbesondere Funktionalität, zugeordnet werden kann, die bei entsprechender Betätigung der Auswahlvorrichtung durch sie erkennbar ist. Insbesondere kann eine Auswahldimension einer Bedienungsmöglichkeit der Auswahlvorrichtung entlang einer ersten Richtung im Raum entsprechen, und eine andere Auswahldimension kann einer entsprechenden Bedienungsmöglichkeit entlang einer zweiten unterschiedlichen Richtung im Raum entsprechen. Dabei können insbesondere die beiden Richtungen auch senkrecht zueinanderstehen und etwa eine X-Richtung (z.B. Links/Rechts)und eine senkrechte dazu stehende Y-Richtung (z.B. Hoch/Runter) definieren, entlang denen die Auswahlvorrichtung jeweils bedienbar ist. Eine Bedienungsmöglichkeit entlang einer Richtung kann insbesondere das Verschieben eines Schiebers oder Kippen eines Schalthebels entlang der Richtung oder das Ausführen einer Geste bezüglich einer berührungsempfindlichen Oberfläche entlang der Richtung sein. Hin- und Rückrichtung sind dabei bevorzugt zur selben Auswahldimension zusammengefasst, so dass etwa ein Bedienen entlang der positiven X-Richtung und einen Bedienen entlang der Gegenrichtung (also in negativer X-Richtung) zur selben Auswahldimension gehören. Analog dazu kann eine Auswahldimension auch durch eine Drehrichtung (z.B. im Uhrzeigersinn), insbesondere innerhalb einer Ebene, bestimmt sein und die umgekehrte Drehrichtung (z.B. gegen den Uhrzeigersinn) kann wiederum zur selben Auswahldimension gehören, oder aber alternativ eine eigene Auswahldimension definieren.

Gemäß einer weiteren bevorzugten Ausführungsform ist die Auswahlvorrichtung auch entlang einer dritten Auswahldimension betätigbar, um eine weitere Einstellung für den ausgewählten Fahrparameter auszuwählen oder die mittels der anderen Auswahldimensionen erfolgte Auswahl zu aktivieren oder zu deaktivieren. So kann insbesondere eine erste Auswahldimension zur Auswahl eines Fahrparameters dienen, dessen Einstellung mittels der zweiten Auswahldimension festgelegt und mittels der dritten Auswahldimension aktiviert wird. Auf gleiche Weise ist auch eine entsprechende Deaktivierung darstellbar. So sind mittels einer einzigen Auswahlvorrichtung, die aufgrund der Trennung der verschiedenen Auswahldimensionen auch komplexe Eingaben zulässt, auf platzsparende und einfach zu bedienende Art und Weise eine Auswahl und Einstellung von Fahrparametern sowie Aktivierung dieser Einstellung zur jeweils mittels der Schaltvorrichtung aktivierten Fahrautomatisierungsstufe möglich.

Gemäß einer weiteren bevorzugten Ausführungsform ist die Auswahlvorrichtung entlang der ersten und einer zweiten Auswahldimension jeweils zweistufig betätigbar ausgebildet. Das bedeutet, dass für die erste und zweite Auswahldimension jeweils nur zwei separate Betätigungsmöglichkeiten bestehen. Insbesondere kann die Auswahlvorrichtung als in zwei verschiedenen Richtungen beweglicher Schalter (etwa als Schiebe- oder Kippschalter) ausgebildet sein, wobei die erste Auswahldimension einer Bewegung des Schalters entlang einer ersten Richtung entspricht, die zweistufige Betätigung zu einer Vorwärts- bzw. Rückwärtsbewegung des Schalters entlang der ersten Richtung korrespondiert, und für die zweite Auswahldimension dasselbe in Bezug auf eine zweite, von der ersten Richtung verschiedene Richtung entsprechend gilt. Dabei ist zu bemerken, dass eine Limitierung auf eine zweistufige Betätigung der Auswahlvorrichtung entlang einer Auswahldimension nicht mit einer Begrenzung auf nur zwei ausführbare Positionen für diese Auswahldimension gleichzusetzen ist. Vielmehr ist die Anzahl dieser auswählbaren Positionen (insbesondere Fahrparameter bzw. Einstellungen dazu) grundsätzlich nicht begrenzt, denn durch wiederholtes Bedienen der Auswahlvorrichtung entlang der Auswahldimension kann schrittweise in der entsprechenden Bedienungsrichtung von einer Position zur nächsten Position vorgerückt werden. Dies kann insbesondere auch rotierend im Sinne einer Endlosschleife erfolgen. Alternativ können insbesondere eine erste und eine letzte Position definiert sein, bei denen ein Weiterschalten in derselben Bedienrichtung, mit der die entsprechende Position erreicht wurde, nicht mehr möglich ist.

Gemäß einer weiteren bevorzugten Ausführungsform weist die Auswahlvorrichtung wenigstens eines der folgenden Eingabeelemente auf: Joystick; mehrdimensional betätigbarer Schalter, insbesondere als Kipp- oder Schiebeschalter ausgebildet; Drehschalter, wobei unterschiedliche Drehrichtungen zu verschiedenen Auswahldimensionen korrespondieren; Touchscreen oder Trackpad. Die Eingabeelemente können insbesondere auch so ausgebildet sein, dass sie nach einer Betätigung durch den Benutzer wieder in ihre Ausgangsstellung zurückkehren und von dort aus erneut betätigt werden können, insbesondere im Sinne des vorgenannten wiederholten Betätigens entlang einer Richtung. Auf diese Weise ist eine besonders platzsparende Lösung möglich und auch die "blinde" Bedienung wird erleichtert, da sich das entsprechende Eingabeelement zu Beginn seiner Betätigung stets an derselben Stelle befindet. Bei Joysticks bzw. Schaltern kann das Zurückkehren einem realen physikalischen Zurückkehren in die Ausgangsstellung entsprechen, während bei einem Touchscreen ein entsprechendes Zurückkehren virtuell durch eine entsprechende Anzeige realisiert werden kann. Soweit es sich bei dem Eingabeelement um ein Trackpad oder einen Touchscreen handelt, kann es insbesondere, wie üblich, im Wesentlichen rechteckig ausgebildet sein. Alternativ dazu sind jedoch auch viele andere Formen denkbar, insbesondere Schleifen- oder kreisförmige Anordnungen, etwa im Sinne eines Scroll-Wheels.

Gemäß einer weiteren bevorzugten Ausführungsform ist die Auswahlvorrichtung zur Auswahl und Einstellung von wenigstens einem der folgenden Fahrparameter eingerichtet: Abstand zum vorausfahrenden Fahrzeug; Fahrzeuggeschwindigkeit bzw. Geschwindigkeitsbereich; Stärke der lateralen Spurhalteführung; Spurwechsel; Einparken. Der Abstand zum vorausfahrenden Fahrzeug kann insbesondere ein Solloder ein Mindestabstand sein. Die Fahrzeuggeschwindigkeit kann insbesondere eine Soll-, Maximal- oder Minimalgeschwindigkeit sein. Die Stärke der lateralen Spurführung kann insbesondere den Verlauf der Stärke der Richtungskorrektur als Funktion der lateralen Abweichung des Fahrzeugs aus einer Solllinie innerhalb der Spur, etwa ihrer gedachten Mittellinie, festlegen. So kann dieser Fahrparameter etwa verwendet werden, um zwischen einem sanfteren und/oder späteren Anstieg und einem steileren und/oder früheren Anstieg der Richtungskorrektur zur Spureinhaltung zu wählen. Beim Spurwechsel kann der Fahrzeugparameter insbesondere die Richtung des Spurwechsels (nach links bzw. nach rechts) oder die Auswahl einer gewünschten Zielspur definieren.

Gemäß einer weiteren bevorzugten Ausführungsform sind die Schaltvorrichtung und die Auswahlvorrichtung so räumlich benachbart zueinander angeordnet, dass sie auch bei fixierter Hand des Fahrers mit demselben Finger der Hand, insbesondere mit dem Daumen, bedienbar sind. So können insbesondere allein mittels einer reinen Fingerbewegung sowohl die Schaltvorrichtung als auch die Auswahlvorrichtung bedient werden und die Bedienung zwischen beiden gewechselt werden.

Gemäß einer weiteren bevorzugten Ausführungsform ist die Anzeigevorrichtung eingerichtet, bei der Konfiguration der ausgewählten Fahrautomatisierungsstufe die verfügbaren Auswahlmöglichkeiten für den wenigstens einen Fahrparameter mithilfe von nebeneinander angeordneten Icons anzuzeigen. Die Icons können insbesondere entlang einer geraden oder geschlossenen Linie angeordnet sein, so dass sie zur Vornahme einer Auswahl eines Fahrparameters bzw. seiner Einstellung mittels der Auswahlvorrichtung seriell durchlaufen werden können.

Gemäß einer weiteren bevorzugten Ausführungsform ist die Anzeigevorrichtung eingerichtet, die einem aktuellen Betätigungszustand der Auswahlvorrichtung entsprechende Auswahl eines Fahrparameters oder dessen Einstellung markiert darzustellen. Dies kann etwa mithilfe eines entlang der verschiedenen Auswahlmöglichkeiten beweglichen Grafikobjekts (z.B. Pfeil) oder mittels einer Veränderung der Darstellung der gerade ausgewählten Auswahlmöglichkeit (z.B. Farb-, Größen- oder Hintergrundänderung, oder invertierte Darstellung) erfolgen.

Gemäß einer weiteren bevorzugten Ausführungsform weist die Benutzerschnittstellenvorrichtung des Weiteren einen Sensor zum Detektieren einer Berührung der Auswahlvorrichtung oder eines sie umgebenden Cockpitelements des Fahrzeugs durch einen menschlichen Benutzer auf. Dabei ist die Anzeigevorrichtung eingerichtet, nur dann die verfügbaren Auswahlmöglichkeiten für den wenigstens einen Fahrparameter bei der Konfiguration der ausgewählten Fahrautomatisierungsstufe anzuzeigen, wenn der Sensor eine Berührung detektiert. Auf diese Weise werden die verfügbaren Auswahlmöglichkeiten selektiv nur dann auf der Anzeigevorrichtung dargestellt, wenn sie voraussichtlich, wie durch das Sensorsignal indiziert, zur Vornahme einer Auswahl zur Verfügung stehen sollen. Zeigt das Sensorsignal dagegen keine aktuelle Berührung an, so kann die entsprechende Anzeigefläche der Anzeigevorrichtung anderweitig verwendet werden. Es ist somit zweckmäßig, den Sensor insbesondere so nahe der Schaltvorrichtung oder der Auswahlvorrichtung oder an einem Cockpitelement in deren unmittelbaren Umfeld anzuordnen, dass der Sensor die Anwesenheit einer Hand des Benutzers erkennen kann, wenn sich diese derart bezüglich der Benutzerschnittstellenvorrichtung positioniert befindet, dass der Benutzer mit ihr eine entsprechende Bedienung der Schaltvorrichtung und der Auswahlvorrichtung vornehmen kann. Insbesondere kann der Sensor zwischen einer für die Bedienung der Benutzerschnittstellenvorrichtung bevorzugten Auflagefläche der Hand an einem Cockpitelement, etwa am Lenkrad, und einem die Schaltvorrichtung und die Auswahlvorrichtung zusammenfassenden Bedienfeld angeordnet sein.

Gemäß einer weiteren bevorzugten Ausführungsform weist die Anzeigevorrichtung ein Kombinationsinstrument, ein Head-up-Display oder einen Bildschirm auf oder ist ein Teil derselben. Auf diese Weise kann die Anzeigevorrichtung insbesondere mittels bereits für andere Funktionalitäten im Kraftfahrzeug vorgesehener Anzeigesysteme implementiert sein. Insbesondere bieten derart variable Anzeigevorrichtungen auch den Vorteil, dass spätere Änderungen oder Ergänzungen der durch die Anzeigevorrichtung anzuzeigenden Fahrparameter und deren Einstellungen leicht allein auf Software- bzw. Datenebene implementiert werden können, ohne dass dazu Hardware-Anpassungen erforderlich wären.

Ein zweiter Aspekt der Erfindung betrifft eine Lenkvorrichtung für ein Kraftfahrzeug, insbesondere ein Lenkrad mit einer Benutzerschnittstellenvorrichtung gemäß dem ersten Aspekt der Erfindung einschließlich seiner verschiedenen Ausführungsformen, Weiterbildungen und Varianten. Die Steuerungsvorrichtung kann insbesondere ein Multifunktionslenkrad (MFL) sein und die Benutzerschnittstellenvorrichtung kann bevorzugt an einer Lenkradspeiche oder am Mittelteil des Lenkrads (insbesondere am Pralltopf) angeordnet sein. Das vorausgehend jeweils für die Benutzerschnittstellenvorrichtung und ihre Ausführungsformen Gesagte trifft gleichermaßen auf die erfindungsgemäße Lenkvorrichtung gemäß dem zweiten Aspekt der Erfindung zu.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt
- **Fig. 1**: schematisch eine Benutzerschnittstellenvorrichtung gemäß einer bevorzugten Ausführungsform der Erfindung; und
- **Fig. 2**: schematisch eine bevorzugte Anordnung der Elemente der Benutzerschnittstellenvorrichtung mit einem an einem Lenkrad eines Kraftfahrzeugs angeordneten Bedienfeld und einer als Teil eines Kombinationsinstruments ausgebildeten Anzeigevorrichtung.

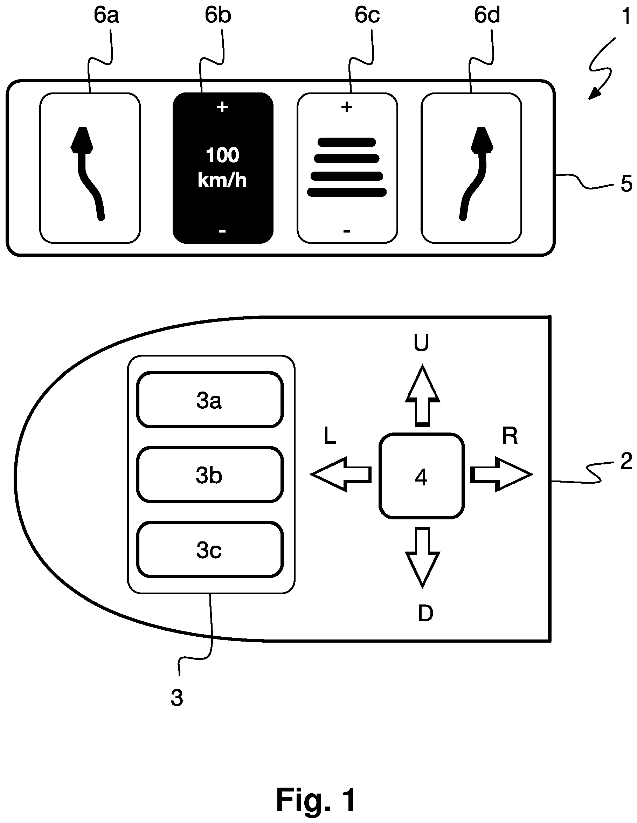

Die in **Fig. 1** gezeigte Benutzerschnittstellenvorrichtung 1 weist zum einen ein im unteren Teil der Figur gezeigtes Bedienfeld 2 auf, an dem eine in Form eines Tastenfelds ausgebildete Schaltvorrichtung 3 mit drei verschiedenen Tastenschaltern 3a, 3b und 3c sowie eine in Form eines zweidimensional betätigbaren Schiebeschalters mit zusätzlicher Drucktastenfunktion ausgebildete Auswahlvorrichtung 4 angeordnet sind. Jeder der Tasten 3a, 3b und 3c ist eine bestimmte Fahrautomatisierungsstufe zugeordnet, die mittels Druck auf die entsprechende Taste aktiviert werden kann. So kann etwa die Taste 3a zur Aktivierung von autonomem Fahren, die Taste 3b zur Aktivierung von teilautomatisiertem Fahren und die Taste 3c zur Aktivierung von manuellem Fahren konfiguriert sein. Sobald eine Taste gedrückt und somit die zugeordnete Fahrautomatisierungsstufe aktiviert wird, wird die zuvor eingestellte Fahrautomatisierungsstufe deaktiviert. Die Tasten 3a, 3b und 3c dienen somit zu Umschalten zwischen den verschiedenen Fahrautomatisierungsstufen.

Die Tasten 3a, 3b und 3c und die Auswahlvorrichtung 4 sind so in unmittelbarer Nähe voneinander auf dem Bedienfeld 2 angeordnet, dass der maximale Abstand zwischen je zwei dieser Bedienungselemente maximal wenige Zentimeter, insbesondere maximal 5 cm, beträgt und somit innerhalb der Bewegungsspanne eines Fingers, insbesondere des Daumens einer Hand eines jugendlichen oder erwachsenen Menschen liegen. Die Auswahlvorrichtung 4 weist einen Schiebeschalter auf, welcher in der zweidimensionalen Ebene des Bedienfelds 2 in zwei zueinander senkrecht stehenden Richtungen (d.h. Auswahldimensionen) jeweils vor und zurück bewegt werden kann. In Fig. 1 sind diese Richtungen mit L (für Links bzw. Left) und R (für Rechts bzw. Right) bzw. mit U (für Up) und D (für Down) gekennzeichnet. Der Schiebeschalter ist, wenn er entlang einer dieser Richtungen ausgelenkt ist, mit einer rücktreibenden Kraft beaufschlagt, so dass er, wenn er wieder losgelassen wird, in seine zentrale Ausgangsstellung zurückkehrt. Zusätzlich kann der Schiebeschalter, zumindest wenn er sich in seiner zentralen Ausgangsstellung befindet, auch entlang einer dritten, senkrecht zu den beiden anderen Richtungen bzw. der Bildebene stehenden Richtung durch Druck betätigt werden und somit auch die Funktion eines Tastenschalters ausüben (weitere Auswahldimension). Somit ist die Auswahlvorrichtung in der L/R-Richtung und U/D-Richtung jeweils zweistufig und in der senkrecht dazu verlaufenden Betätigungsrichtung des Tastenschalters einstufig ausgebildet.

Im oberen Teil der Fig. 1 ist die Anzeigevorrichtung 5 der Benutzerschnittstellenvorrichtung 1 exemplarisch dargestellt. Die Anzeigevorrichtung 5 kann insbesondere mittels eines üblichen Displays bzw. Bildschirms, etwa auf LCD- oder LED-Basis, implementiert sein. Stattdessen oder zusätzlich sind auch spezielle Anzeigeelemente denkbar. Auf der Anzeigevorrichtung 5 werden zu einer mittels der Schaltvorrichtung 3 aktuell aktivierten Fahrautomatisierungsstufe zugeordnete Fahrparametersoweit verfügbar - sowie gegebenenfalls deren Einstellung mittels Icons 6a bis 6d angezeigt. Die beispielhaft gezeigten Icons 6a bis 6d gehören zur Fahrautomatisierungsstufe für teilautomatisiertes Fahren.

Die Icons 6a und 6d repräsentieren dabei den Fahrparameter "Spurwechsel" nach links bzw. nach rechts, d.h. durch Aktivierung des durch diese eigens jeweils repräsentierten Fahrmodus kann das Kraftahrzeugs veranlasst werden, einen entsprechenden Spurwechsel automatisiert vorzunehmen. Der Fahrer trifft hier also nur die Entscheidung über den Spurwechsels selbst und dessen Richtung, sobald er dies aber mittels der Auswahlvorrichtung 4 dem Fahrzeug mitgeteilt hat, führt dieses den Spurwechsel selbstständig aus. Das Icon 6b repräsentiert den Fahrparameter "Fahrgeschwindigkeit", wobei es sich insbesondere um eine Sollgeschwindigkeit, eine Maximalgeschwindigkeit oder eine Minimalgeschwindigkeit für das Kraftfahrzeug handeln kann. Das Icon 6c repräsentiert den Fahrparameter "Abstand zum Vorderfahrzeug", wobei es sich insbesondere um einen einzuhaltenden Minimalabstand zum Vorderfahrzeug handeln kann. Dieser Minimalabstand kann, insbesondere geschwindigkeitsabhängig, variabel sein, so dass die Eingabe keine absolute Längenangabe repräsentiert, sondern etwa den Grad des einzuhaltenden Abstands, z.B. "kleiner Abstand", "mittlerer Abstand" oder "großer Abstand" angibt.

In Fig. 1 ist gegenwärtig der Fahrparameter "Fahrgeschwindigkeit" ausgewählt, was durch Invertierung des entsprechenden Icons 6b (dunkler Hintergrund und helle Schrift) für den Fahrer kenntlich gemacht wird. Durch gegebenenfalls mehrfache Betätigung des Schiebeschalters der Auswahlvorrichtung 4 entlang der L/R-Richtung lässt sich zwischen den verschiedenen Icons und somit den diesen zugeordneten Fahrparametern wechseln. Durch gegebenenfalls mehrfache Betätigung des Schiebeschalters entlang der U/D-Richtung lässt sich dagegen eine Einstellung bzw. Wertzuweisung für den zuvor entlang der L/R-Richtung ausgewählten Fahrparameter auswählen. Mit jeder einzelnen Betätigung des Schiebeschalters erfolgt der Betätigungsrichtung entsprechend ein Sprung zum nächsten Icon/Fahrparameter bzw. zur nächsten Fahrparametereinstellung.

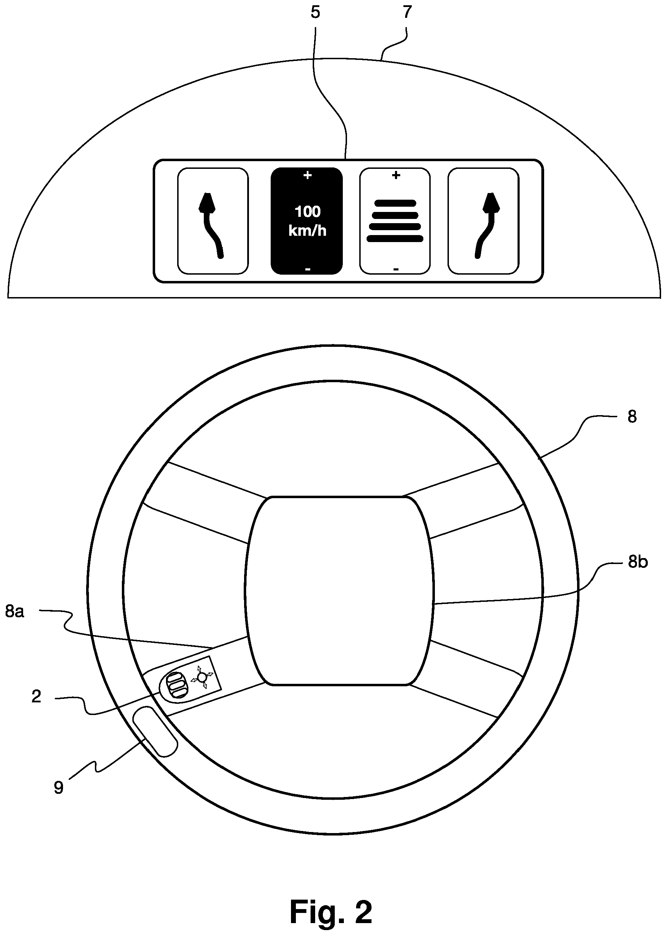

**Fig. 2** zeigt eine bevorzugte Anordnung der Benutzerschnittstellenvorrichtung 1 im Kraftfahrzeug. Dabei ist die Anzeigevorrichtung 5 in einem, insbesondere bei PKW, LKW und Bussen üblichen Kombinationsinstrument oder Head-up-Display 7 integriert und liegt so im regelmäßigen Blickfeld des Fahrers. Das Bedienfeld 2 ist an einer Lenkradspeiche 8a eines Lenkrads 8 so angeordnet, dass, wenn das Lenkrad von der linken Hand des Fahrers in der Nähe der Lenkradspeiche 8a ergriffen wird, sein Daumen selbst bei fixierter Hand sämtliche Bedienelemente des Bedienfelds 2, d.h. sowohl die Tasten 3a - c der Schaltvorrichtung 3 als auch den Schiebeschalter der Auswahlvorrichtung 4 erreichen und bedienen kann. Alternativ dazu kann das Bedienfeld 2 auch im Mittelteil 8b des Lenkrads, der auch regelmäßig als "Pralltopf" bezeichnet wird, angeordnet sein. In einem zum Bedienfeld 2 benachbarten Bereich des Lenkrads 8 ist ein Sensor 9 der Benutzerschnittstellenvorrichtung 1 angeordnet, der dazu eingerichtet ist, die Anwesenheit einer menschlichen Hand in diesem Bereich zu detektieren. Er ist mit der Anzeigevorrichtung 5 über eine entsprechende Steuerung (insbesondere einen Prozessor) so gekoppelt, dass dort nur dann zu Fahrparametern bzw. deren Einstellmöglichkeiten korrespondierende Informationen oder Symbole, insbesondere Icons 6a-6d, angezeigt werden, wenn der Sensor die Anwesenheit einer Hand erkennt. Auch kann in einer Variante die Aktivierung des Bedienfelds bzw. die Auswertung von Eingaben daran nur in diesem Fall erfolgen.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zu Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

### BEZUGSZEICHENLISTE

- 1: Benutzerschnittstellenvorrichtung
- 2: Bedienfeld
- 3: Schaltvorrichtung
- 3a-c: Tasten zur Fahrautomatisierungsstufenauswahl
- 4: Auswahlvorrichtung, insbesondere mehrdimensionaler Schalter
- 5: Anzeigevorrichtung
- 6a-d: Icons
- 7: Kombiinstrument
- 8: Lenkrad
- 8a: Lenkradspeiche
- 8b: Mittelteil des Lenkrads, insbesondere Pralltopf
- 9: Sensor

## Patentansprüche

1. Benutzerschnittstellenvorrichtung (1) zur Auswahl eines Betriebsmodus für automatisiertes Fahren bei einem Kraftfahrzeug, aufweisend:
eine Schaltvorrichtung (3) zum Umschalten zwischen verschiedenen Fahrautomatisierungsstufen eines Kraftfahrzeugs;
eine Auswahlvorrichtung (4) zur Festlegung wenigstens eines Fahrparameters zur Konfiguration der mittels der Schaltvorrichtung (3) ausgewählten Fahrautomatisierungsstufe, wobei die Auswahlvorrichtung (4) mehrdimensional betätigbar ist; und
eine mit der Auswahlvorrichtung (4) zusammenwirkende Anzeigevorrichtung (5) zur Anzeige von verfügbaren Auswahlmöglichkeiten für den wenigstens einen Fahrparameter bei der Konfiguration der ausgewählten Fahrautomatisierungsstufe
**dadurch gekennzeichnet, dass**
zumindest dann, wenn mittels der Schaltvorrichtung (3) eine Fahrautomatisierungsstufe für teilautomatisiertes Fahren ausgewählt ist, die Betätigung der Auswahlvorrichtung (4) entlang einer ersten Auswahldimension zur Auswahl eines von mehreren Fahrparametern für die ausgewählte Fahrautomatisierungsstufe und entlang einer zweiten Auswahldimension zur Auswahl einer Einstellung für den ausgewählten Fahrparameter dient.

2. Benutzerschnittstellenvorrichtung (1) gemäß Anspruch 1, wobei die Schaltvorrichtung (3) wenigstens drei zu verschiedenen Fahrautomatisierungsstufen des Kraftfahrzeugs korrespondierende Schaltpositionen aufweist.

3. Benutzerschnittstellenvorrichtung (1) gemäß Anspruch 2, wobei die wenigstens drei Fahrautomatisierungsstufen aus den folgenden Stufen ausgewählt sind: manuelles Fahren, teilautomatisiertes Fahren, hochautomatisiertes Fahren, autonomes Fahren.

4. Benutzerschnittstellenvorrichtung (1) gemäß einem der vorausgehenden Ansprüche, wobei die Schaltvorrichtung (3) zu jeder Fahrautomatisierungsstufe einen entsprechenden Schalter (3a, 3b, 3c) zum Umschalten auf diese Fahrautomatisierungsstufe aufweist.

5. Benutzerschnittstellenvorrichtung (1) gemäß einem der vorausgehenden Ansprüche, wobei der ersten Auswahldimension eine Bedienungsmöglichkeit/Betätigung der Auswahlvorrichtung entlang einer ersten Richtung im Raum entspricht, der zweiten Auswahldimension eine Bedienungsmöglichkeit/Betätigung der Auswahlvorrichtung entlang einer zweiten unterschiedlichen Richtung im Raum entspricht, und die erste und zweite Richtung vorzugsweise senkrecht zueinander stehen.

6. Benutzerschnittstellenvorrichtung (1) gemäß Anspruch 5, wobei die Auswahlvorrichtung (4) auch entlang einer dritten Auswahldimension betätigbar ist, um eine weitere Einstellung für den ausgewählten Fahrparameter auszuwählen oder die mittels der anderen Auswahldimensionen erfolgte Auswahl zu aktivieren oder zu deaktivieren.

7. Benutzerschnittstellenvorrichtung (1) gemäß Anspruch 5 oder 6, wobei die Auswahlvorrichtung (4) entlang der ersten und einer zweiten Auswahldimension jeweils zweitstufig betätigbar ausgebildet ist.

8. Benutzerschnittstellenvorrichtung (1) gemäß einem der vorausgehenden Ansprüche, wobei die Auswahlvorrichtung (4) wenigstens eines der folgenden Eingabeelemente aufweist:
- Joystick;
- mehrdimensional betätigbarer Schalter, insbesondere als Kipp- oder Schiebeschalter ausgebildet;
- Drehschalter, wobei unterschiedliche Drehrichtungen zu verschiedenen Auswahldimensionen korrespondieren;
- Touchscreen oder Trackpad.

9. Benutzerschnittstellenvorrichtung (1) gemäß einem der vorausgehenden Ansprüche, wobei die Auswahlvorrichtung (4) zur Auswahl und Einstellung von wenigstens einem der folgenden Fahrparameter eingerichtet ist:
- Abstand zum vorausfahrenden Fahrzeug;
- Fahrzeuggeschwindigkeit bzw. Geschwindigkeitsbereich;
- Stärke der lateralen Spurhalteführung;
- Spurwechsel;
- Einparken.

10. Benutzerschnittstellenvorrichtung (1) gemäß einem der vorausgehenden Ansprüche, wobei die Schaltvorrichtung (3) und die Auswahlvorrichtung (4) so räumlich benachbart zueinander angeordnet sind, dass sie auch bei fixierter Hand des Fahrers mit demselben Finger der Hand bedienbar sind.

11. Benutzerschnittstellenvorrichtung (1) gemäß einem der vorausgehenden Ansprüche, wobei die Anzeigevorrichtung (5) eingerichtet ist, bei der Konfiguration der ausgewählten Fahrautomatisierungsstufe die verfügbaren Auswahlmöglichkeiten für den wenigstens einen Fahrparameter mithilfe von nebeneinander angeordneten Icons (6a, 6b, 6c, 6d) anzuzeigen.

12. Benutzerschnittstellenvorrichtung (1) gemäß einem der vorausgehenden Ansprüche, wobei die Anzeigevorrichtung (5) eingerichtet ist, die einem aktuellen Betätigungszustand der Auswahlvorrichtung (4) entsprechende Auswahl eines Fahrparameters oder dessen Einstellung markiert darzustellen.

13. Benutzerschnittstellenvorrichtung (1) gemäß einem der vorausgehenden Ansprüche, des Weiteren aufweisend einen Sensor (9) zum Detektieren einer Berührung der Auswahlvorrichtung (4) oder eines sie umgebenden Cockpitelements des Fahrzeugs durch einen menschlichen Benutzer, wobei die Anzeigevorrichtung (5) eingerichtet ist, nur dann die verfügbaren Auswahlmöglichkeiten für den wenigstens einen Fahrparameter bei der Konfiguration der ausgewählten Fahrautomatisierungsstufe anzuzeigen, wenn der Sensor eine Berührung detektiert.

14. Benutzerschnittstellenvorrichtung (1) gemäß einem der vorausgehenden Ansprüche, wobei die Anzeigevorrichtung (5) ein Kombinationsinstrument (7), ein Head-up-Display oder einen Bildschirm aufweist oder ein Teil derselben ist.

15. Lenkvorrichtung für ein Kraftfahrzeug, insbesondere Lenkrad (8), mit einer Benutzerschnittstellenvorrichtung (1) gemäß einem der vorausgehenden Ansprüche.

## Claims

1. User interface apparatus (1) for selecting a mode of operation for automated driving in a motor vehicle, having:
a switching apparatus (3) for changing over between different driving automation levels of a motor vehicle;
a selection apparatus (4) for stipulating at least one driving parameter for configuring the driving automation level selected by means of the switching apparatus (3), the selection apparatus (4) being operable multidimensionally; and
a display apparatus (5), interacting with the selection apparatus (4), for displaying available selection options for the at least one driving parameter during configuration of the selected driving automation level,
**characterized in that**
at least when a driving automation level for semiautomated driving is selected by means of the switching apparatus (3), the operation of the selection apparatus (4) along a first selection dimension is used to select one of multiple driving parameters for the selected driving automation level and the operation of the selection apparatus along a second selection dimension is used to select a setting for the selected driving parameter.

2. User interface apparatus (1) according to Claim 1, wherein the switching apparatus (3) has at least three switching positions corresponding to different driving automation levels of the motor vehicle.

3. User interface apparatus (1) according to Claim 2, wherein the at least three driving automation levels are selected from the following levels:
manual driving, semiautomated driving, highly automated driving, autonomous driving.

4. User interface apparatus (1) according to one of the preceding claims, wherein the switching apparatus (3) has an appropriate switch (3a, 3b, 3c) for each driving automation level for the purpose of changing over to this driving automation level.

5. User interface apparatus (1) according to one of the preceding claims, wherein the first selection dimension has a corresponding control option/operation of the selection apparatus along a first direction in the space, the second selection dimension has a corresponding control option/operation of the selection apparatus along a second, different direction in the space, and the first and second directions are preferably at right angles to one another.

6. User interface apparatus (1) according to Claim 5, wherein the selection apparatus (4) is also operable along a third selection dimension in order to select a further setting for the selected driving parameter or to activate or deactivate the selection made by means of the other selection dimensions.

7. User interface apparatus (1) according to Claim 5 or 6, wherein the selection apparatus (4) is designed to be operable at two levels along each of the first and a second selection dimension.

8. User interface apparatus (1) according to one of the preceding claims, wherein the selection apparatus (4) has at least one of the following input elements:
- joystick;
- multidimensionally operable switch, in particular in the form of a tumbler switch or slide switch;
- rotary switch, wherein different directions of rotation correspond to different selection dimensions;
- touchscreen or trackpad.

9. User interface apparatus (1) according to one of the preceding claims, wherein the selection apparatus (4) is set up to select and set at least one of the following driving parameters:
- distance from the vehicle ahead;
- vehicle speed or speed range;
- level of the lateral tracking;
- lane change;
- parking.

10. User interface apparatus (1) according to one of the preceding claims, wherein the switching apparatus (3) and the selection apparatus (4) are arranged physically adjacent to one another such that they can be controlled with the same finger of the hand even when the hand of the driver is fixed.

11. User interface apparatus (1) according to one of the preceding claims, wherein the display apparatus (5) is set up so as, during configuration of the selected driving automation level, to display the available selection options for the at least one driving parameter with the aid of icons (6a, 6b, 6c, 6d) arranged next to one another.

12. User interface apparatus (1) according to one of the preceding claims, wherein the display apparatus (5) is set up to depict the selection - corresponding to a current operated state of the selection apparatus (4) - of a driving parameter or the setting thereof in marked fashion.

13. User interface apparatus (1) according to one of the preceding claims, moreover having a sensor (9) for detecting a touch of the selection apparatus (4) or of a cockpit element, surrounding the latter, of the vehicle by a human user, wherein the display apparatus (5) is set up to display the available selection options for the at least one driving parameter during configuration of the selected driving automation level only if the sensor detects a touch.

14. User interface apparatus (1) according to one of the preceding claims, wherein the display apparatus (5) has a combined instrument (7), a head-up display or a screen or is part of same.

15. Steering apparatus for a motor vehicle, in particular a steering wheel (8), having a user interface apparatus (1) according to one of the preceding claims.

## Revendications

1. Dispositif d'interface utilisateur (1) destiné à sélectionner un mode de fonctionnement pour la conduite automatisée d'un véhicule automobile, ledit dispositif comportant :
un dispositif de commutation (3) destiné à commuter entre différents niveaux d'automatisation de conduite d'un véhicule automobile ;
un dispositif de sélection (4) destiné à définir au moins un paramètre de conduite permettant de configurer le niveau d'automatisation de conduite sélectionné au moyen du dispositif de commutation (3), le dispositif de sélection (4) pouvant être actionné dans plusieurs dimensions ; et
un dispositif d'affichage (5) coopérant avec le dispositif de sélection (4) et destiné à afficher des options de sélection disponibles de l'au moins un paramètre de conduite lors de la configuration du niveau d'automatisation de conduite sélectionné,
**caractérisé en ce que**
au moins lorsqu'un niveau d'automatisation de conduite pour une conduite partiellement automatisée est sélectionné au moyen du dispositif de commutation (3), l'actionnement du dispositif de sélection (4) sert dans une première dimension de sélection à sélectionner l'un parmi une pluralité de paramètres de conduite pour le niveau d'automatisation de conduite sélectionné et dans une deuxième dimension de sélection à sélectionner un réglage du paramètre de conduite sélectionné.

2. Dispositif d'interface utilisateur (1) selon la revendication 1, le dispositif de commutation (3) comportant au moins trois positions de commutation correspondant à différents niveaux d'automatisation de conduite du véhicule automobile.

3. Dispositif d'interface utilisateur (1) selon la revendication 2, les au moins trois niveaux d'automatisation de conduite étant sélectionnés parmi les niveaux suivants : conduite manuelle, conduite partiellement automatisée, conduite hautement automatisée, conduite autonome.

4. Dispositif d'interface utilisateur (1) selon l'une des revendications précédentes, le dispositif de commutation (3) comportant pour chaque niveau d'automatisation de conduite un commutateur correspondant (3a, 3b, 3c) destiné à passer à ce niveau d'automatisation de conduite.

5. Dispositif d'interface utilisateur (1) selon l'une des revendications précédentes, la première dimension de sélection correspondant à une option de fonctionnement/un actionnement du dispositif de sélection dans une première direction de l'espace, la deuxième dimension de sélection correspondant à une option de fonctionnement/un actionnement du dispositif de sélection dans une deuxième direction différente de l'espace, et les première et deuxième directions étant de préférence perpendiculaires l'une à l'autre.

6. Dispositif d'interface utilisateur (1) selon la revendication 5, le dispositif de sélection (4) pouvant également être actionné dans une troisième dimension de sélection afin de sélectionner un autre réglage du paramètre de conduite sélectionné ou d'activer ou de désactiver la sélection effectuée au moyen des autres dimensions de sélection.

7. Dispositif d'interface utilisateur (1) selon la revendication 5 ou 6, le dispositif de sélection (4) étant conçu pour pouvoir être actionné dans la première et une deuxième dimension de sélection à chaque fois sur deux niveaux.

8. Dispositif d'interface utilisateur (1) selon l'une des revendications précédentes, le dispositif de sélection (4) comportant au moins l'un des éléments d'entrée suivants :
- une manette ;
- un commutateur à commande multidimensionnelle, conçu notamment comme un commutateur basculant ou coulissant ;
- un commutateur rotatif, des sens de rotation différents correspondant à des dimensions de sélection différentes ;
- un écran tactile ou un pavé tactile.

9. Dispositif d'interface utilisateur (1) selon l'une des revendications précédentes, le dispositif de sélection (4) étant conçu pour sélectionner et régler l'un au moins des paramètres de conduite suivants :
- une distance au véhicule qui précède ;
- une vitesse ou plage de vitesses du véhicule ;
- une force du guidage de maintien de voie latéral ;
- un changement de voie ;
- un stationnement.

10. Dispositif d'interface utilisateur (1) selon l'une des revendications précédentes, le dispositif de commutation (3) et le dispositif de sélection (4) étant disposés spatialement l'un à côté de l'autre de manière à pouvoir être actionnés avec le même doigt de la main même lorsque la main du conducteur est fixe.

11. Dispositif d'interface utilisateur (1) selon l'une des revendications précédentes, le dispositif d'affichage (5) étant conçu pour afficher les options de sélection disponibles pour l'au moins un paramètre de conduite à l'aide d'icônes (6a, 6b, 6c, 6d) disposées les unes à côté des autres lors de la configuration du niveau d'automatisation de conduite sélectionné.

12. Dispositif d'interface utilisateur (1) selon l'une des revendications précédentes, le dispositif d'affichage (5) étant conçu pour présenter de manière marquée la sélection d'un paramètre de conduite ou son réglage qui correspond à un état d'actionnement actuel du dispositif de sélection (4).

13. Dispositif d'interface utilisateur (1) selon l'une des revendications précédentes, comportant en outre un capteur (9) destiné à détecter un contact du dispositif de sélection (4) ou d'un élément d'habitacle environnant du véhicule par un utilisateur humain, le dispositif d'affichage (5) étant conçu pour afficher uniquement les options de sélection disponibles pour l'au moins un paramètre de conduite dans la configuration du niveau d'automatisation de conduite sélectionné lorsque le capteur détecte un contact.

14. Dispositif d'interface utilisateur (1) selon l'une des revendications précédentes, le dispositif d'affichage (5) étant un instrument combiné (7), un affichage tête haute ou un écran ou une partie de ceuxci.

15. Dispositif de direction d'un véhicule automobile, notamment un volant (8), comprenant un dispositif d'interface utilisateur (1) selon l'une des revendications précédentes.
